# EUROPEAN PATENT APPLICATION

(11) **EP 3 543 482 A1**
(43) Date of publication of application: **25.09.2019**
(21) Application number: 19162237.2
(22) Date of filing: 12.03.2019
(51) Int. Cl.: F01D 25/20, F02C 7/06, F02C 7/22, F02C 7/236, F02C 7/32, F02C 9/46

(54) **OIL/FUEL PUMP SYSTEM**

(30) Priority: 22.03.2018 GB 201804577
(71) Applicant: Rolls-Royce plc, London SW1E 6AT (GB)
(72) Inventor: Mason, John, Derby, Derbyshire DE24 8BJ (GB)
(74) Representative: Rolls-Royce plc

(57) **Abstract**

The present disclosure relates to an oil/fuel pump system for an accessory gear box (100) of a gas turbine engine. The system comprises an oil pump (108), the oil pump having an oil pump shaft (105) that can be operatively coupled to a drive shaft (101), and a fuel pump (112), the fuel pump having a fuel pump shaft (109). The fuel pump shaft is operatively coupled to the oil pump shaft such that the fuel pump is only operational when the oil pump is operational. In the event that the oil pump stops operating, the fuel pump also stops operating, thus preventing damage to an engine comprising the system.

## Description

### Field of the Invention

The present disclosure relates to an oil/fuel pump system. In particular, the present disclosure relates to an oil/fuel pump system for an accessory gear box of a gas turbine engine.

### Background

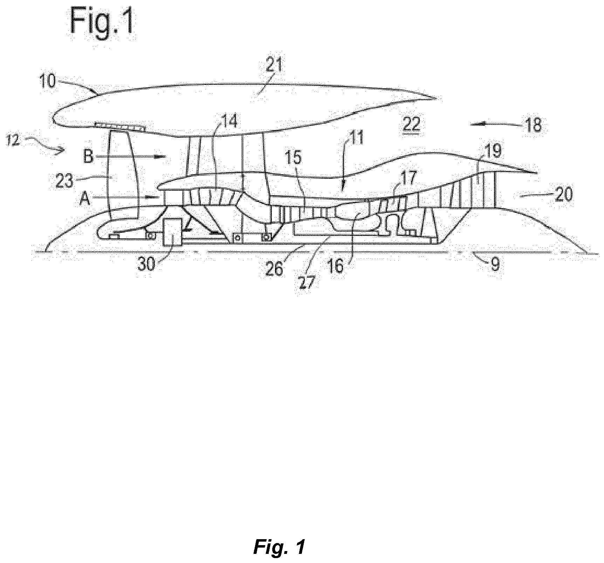

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In operation, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

The epicyclic gearbox 30 is lubricated with oil that is supplied from an oil pump that is driven by an accessory gear box (also known as an accessory drive train) typically mounted on the fan casing or in the engine core. The accessory gear box also drives other 'wet' engine components such as the fuel pump and hydraulic pump as well as 'dry' components such as the generator and alternator.

Each component is coupled to a dedicated component shaft, the component shafts being generally parallel to one another and arranged circumferentially around the fan case. The component shafts are driven via spur gears by a drive shaft which is in turn driven (typically via a bevel gearing) by a radial and/or angled drive shaft connected to one of the engine shafts.

In the event that the oil pump fails, the epicyclic gear box 30 may seize due to a lack of oil supply. This, in turn, may lead to a locked fan 23 which may hazard the aircraft.

It is known to provide warning indications in the event that the oil supply is reduced and the pilot can act to reduce the power or shut down the engine to avoid the fan locking. Any delay in action by the pilot can result in rapid deterioration in the condition of the epicyclic gear box such that fan locking may not be averted.

Whilst automated shut down of the engine in the event of an oil pressure drop is an option, this is considered to be undesirable as it is susceptible to spurious activation and uncommanded reductions in thrust resulting from pressure sensors errors.

There is a need for a means of shutting down an engine in the event of an oil pressure drop that requires no pilot intervention and which is not subject to spurious activation resulting from faulty sensors.

### Summary

In a first aspect, there is provided an oil/fuel pump system for an accessory gear box of a gas turbine engine, the system comprising:
an oil pump, the oil pump having an oil pump shaft that can be operatively coupled to a drive shaft of the accessory gear box; and
a fuel pump, the fuel pump having a fuel pump shaft,
wherein the fuel pump shaft is operatively coupled to the oil pump shaft such that the fuel pump is only operational when the oil pump is operational.

By operatively coupling the fuel pump shaft to the oil pump shaft (rather than having both separately coupled to the drive shaft), any failure of the oil pump (resulting in a reduction/cessation in oil flow to the epicyclic gear box) will result in a reduction/cessation in fuel flow to the engine thus resulting in engine shutdown without any pilot intervention and without any reliance on pressure sensors.

The oil pump shaft and fuel pump shaft may be connected in series. For example, the oil pump shaft and fuel pump shaft may be a coaxial and may be combined as a common component shaft extending through both the oil pump and the fuel pump.

In other embodiments, the oil pump shaft and fuel pump shaft may be connected in parallel with a connecting shaft extending between the oil pump shaft and fuel pump shaft to mechanically link and operatively couple the two.

The oil pump will comprise an oil pump housing. The fuel pump will comprise a fuel pump housing. The oil pump housing and fuel pump housing may be mounted adjacent each other (in series or in parallel) on respective mounting pads.

The oil pump housing and fuel pump housing may be integrated into a single combined pump housing. The single combined pump housing may have outer housing walls defining a pump chamber and a dividing wall, the dividing wall dividing the pump chamber into an oil pump chamber portion and a fuel pump chamber portion.

By combining the oil pump and fuel pump together within a single combined pump housing, the weight of the accessory gear box is reduced not only by a reduction in the weight of the combined housing (owing to the sharing of the dividing wall) but also by a reduction the number of mounting pads required (one versus two).

The oil pump and fuel pump may be independently selected from a geroter pump or a vane pump. The oil pump shaft will drive the rotor/vanes of the oil pump (which will be housed within the oil pump housing) and the fuel pump shaft will drive the rotor/vanes of the fuel pump (which will be housed within the fuel pump housing).

In a second aspect, there is provided an accessory gear box for a gas turbine engine, the gear box comprising:
an oil/fuel pump system according to the first aspect; and
a drive shaft that can be operatively coupled to an engine shaft of the gas turbine engine;
wherein the oil pump shaft is operatively coupled to the drive shaft.

The drive shaft may be operatively coupled to the oil pump shaft through gears e.g. spur gears.

The drive shaft may be operatively coupled to the engine shaft via gears (e.g. bevel gears) and a radial or angled shaft, the radial or angled shaft being connectable to the engine shaft via gears e.g. bevel gears.

In a third aspect, there is provided a gas turbine engine comprising the accessory gear box according to the second aspect.

The accessory gear box may be mounted on the fan case of the gas turbine engine.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### Brief Description of the Drawings

Embodiments will now be described by way of example only with reference to the accompanying drawings in which:
Figure 1 shows a known gas turbine engine;
Figure 2 shows a first embodiment of an oil/fuel pump system;
Figure 3 shows a second embodiment of an oil/fuel pump system; and
Figure 4 shows a third embodiment of an oil/fuel pump system.

### Detailed Description and Further Optional Features

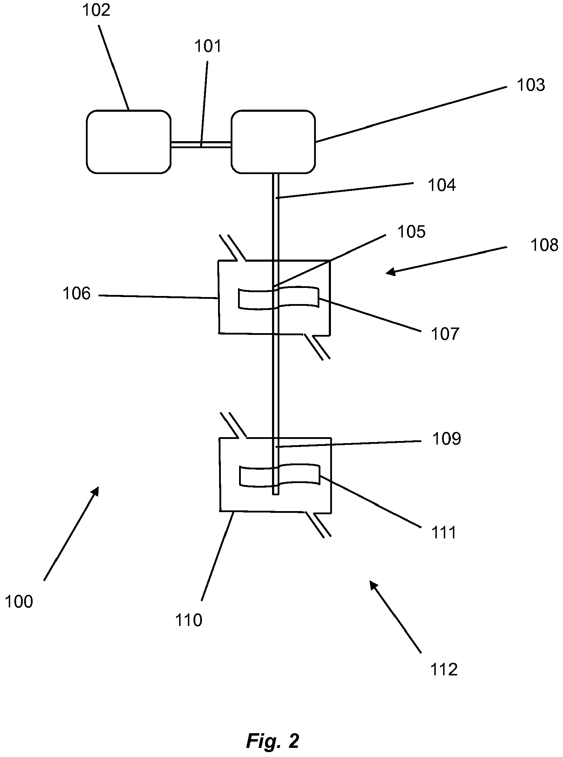

Figure 2 shows an accessory gear box 100 where an oil pump 108 and fuel pump 112 are arranged in series.

The gear box 100 comprises a drive shaft 101 which is operatively coupled to an engine shaft via bevel gears 102 and a radial shaft (not shown). Spur gears 103 operatively couple the drive shaft 101 with common component shaft 104 which comprises an oil pump shaft portion 105 which extends through an oil pump housing 106 and drives a rotor/vanes 107 within the oil pump 108.

The common component shaft 104 also has a fuel pump portion 109 which extends through a fuel pump housing 110 and drives a rotor/vanes 111 within the fuel pump 112.

It can be seen that the common component shaft 104 extending through the oil pump 108 and fuel pump 112 drives the rotor/vanes 107,111 in both pumps 108, 112. Accordingly, in the event of the failure of the oil pump 108, the fuel pump 112 will also cease thus preventing the continued flow of fuel to the engine (leading to engine shut down) in the absence of oil flow.

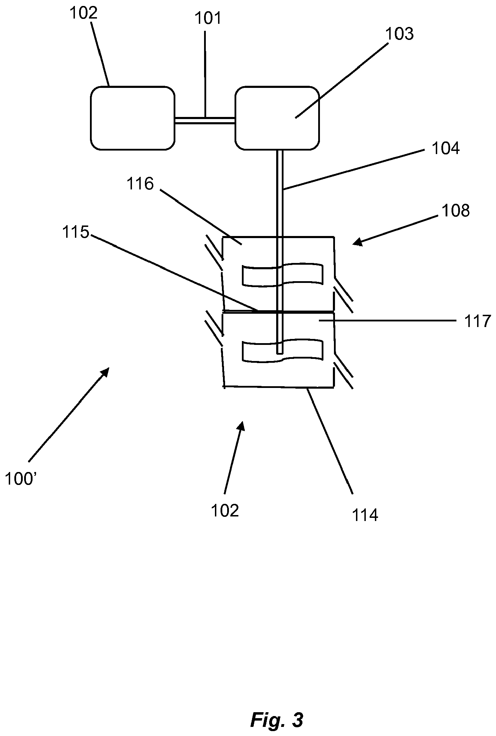

Figure 3 shows an accessory gear box 100' in which the oil pump 108 and fuel pump 112 are connected in series as in Figure 2. The only difference is that the oil pump housing and fuel pump housing are integrated into a single combined pump housing 113. The single combined pump housing 113 has outer housing walls 114 defining a pump chamber, and a dividing wall 115, the dividing wall 115 dividing the pump chamber into an oil pump chamber portion 116 and a fuel pump chamber portion 117.

By combining the oil pump 108 and fuel pump 112 together within a single combined pump housing 113, the weight of the accessory gear box 100' is reduced not only by a reduction in the weight of the combined pump housing 113 (owing to the sharing of the dividing wall 115) but also by a reduction the number of mounting pads required. Only a single mounting pad (not shown) is required to mount the combined pump housing 113 whereas two are required for the Figure 2 embodiment.

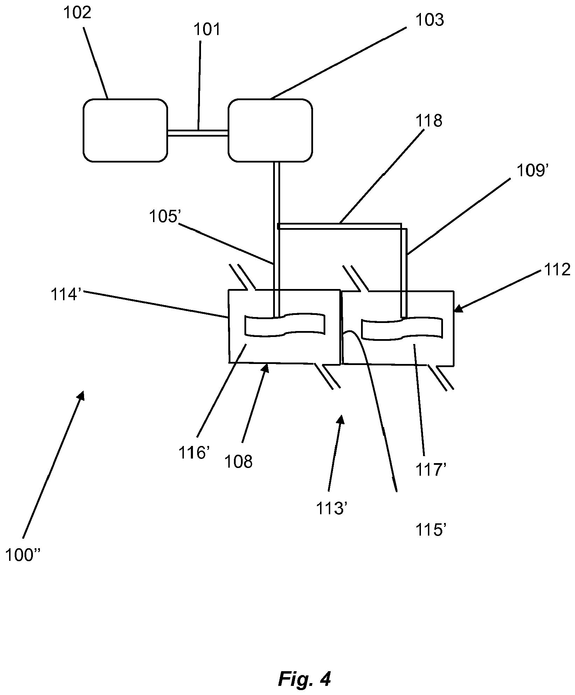

Figure 4 shows an accessory gear box 100" where the oil pump 108 and fuel pump 112 are connected in parallel.

As in the embodiments shown in Figures 2 and 3, the gear box 100" comprises a drive shaft 101 which is operatively coupled to an engine shaft via bevel gears 102 and a radial shaft (not shown). Spur gears 103 operatively couple the drive shaft 101 with an oil pump shaft 105' which extends into an oil pump chamber portion 116' of a combined pump housing 113' which has outer housing walls 114', the oil pump chamber portion 116' being divided from a fuel pump chamber portion 117' by a dividing wall 115'. The oil pump shaft 105' drives the rotor/vanes in the oil pump 108.

The gear box 100" also has a fuel pump shaft 109' which is parallel to the oil pump shaft 105' and which extends into the fuel pump chamber portion 117'. The fuel pump shaft 109' drives the rotor/vanes in the fuel pump 112.

The oil pump shaft 105' and fuel pump shaft 109' are mechanically linked and operatively coupled by a connecting shaft 118 (and gears (not shown)).

In the event of the failure of the oil pump 108, the connecting shaft 118 will no longer be driven by the oil pump shaft 105' and the fuel pump 112 will cease thus preventing the continued flow of fuel to the engine in the absence of oil flow.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. An oil/fuel pump system for an accessory gear box (100, 100', 100") of a gas turbine engine, the system comprising:
an oil pump (108), the oil pump having an oil pump shaft (105; 105') that can be operatively coupled to a drive shaft (101); and
a fuel pump (112), the fuel pump having a fuel pump shaft (109; 109'),
wherein the fuel pump shaft is operatively coupled to the oil pump shaft such that the fuel pump is only operational when the oil pump is operational.

2. A system according to claim 1 wherein the oil pump shaft and fuel pump shaft are connected in series.

3. A system according to claim 2 wherein the oil pump shaft and fuel pump shaft are combined as a common component shaft (104) having an oil pump shaft portion (105) extending through the oil pump and a fuel pump shaft portion (109) extending through the fuel pump.

4. A system according to claim 1 wherein the oil pump shaft (105') and fuel pump shaft (109') are connected in parallel with a connecting shaft (118) extending between the oil pump shaft and fuel pump shaft.

5. A system according to any one of the preceding claims wherein the oil pump comprises an oil pump housing (106) and the fuel pump comprises a fuel pump housing (110), and wherein the oil pump housing and fuel pump housing are mounted adjacent each other on respective mounting pads.

6. A system according to any one of claims 1 to 4 wherein the oil pump comprises an oil pump housing and the fuel pump comprises a fuel pump housing, and wherein the oil pump housing and fuel pump housing are integrated into a single combined pump housing.

7. A system according to any one of the preceding claims wherein the oil pump and fuel pump are independently selected from a geroter pump or a vane pump.

8. An accessory gear box (100; 100'; 100") for a gas turbine engine, the gear box comprising:
an oil/fuel pump system according to any one of the preceding claims; and
a drive shaft (101) that can be operatively coupled to an engine shaft of the gas turbine engine;
wherein the oil pump shaft is operatively coupled to the drive shaft.

9. A gas turbine engine comprising an accessory gear box according to claim 8.
